# EUROPÄISCHE PATENTSCHRIFT

(11) **EP 1 519 856 B1**
(45) Veröffentlichungstag und Bekanntmachung des Hinweises auf die Patenterteilung: **22.11.2006**
(21) Anmeldenummer: 03762568.8
(22) Anmeldetag: 01.07.2003
(51) Int. Cl.: B60R 11/00

(54) **VERFAHREN UND SYSTEM ZUM DIEBSTAHLSCHUTZ EINES ELEKTRONISCHEN GERAETES SOWIE ELEKTRONISCHES GERAET**
METHOD AND SYSTEM FOR PROTECTING AN ELECTRONIC DEVICE AGAINST THEFT AND ELECTRONIC DEVICE
PROCEDE ET SYSTEME DE PROTECTION CONTRE LE VOL D'UN APPAREIL ELECTRONIQUE, ET APPAREIL ELECTRONIQUE

(30) Priorität: 03.07.2002 DE 10229765
(43) Veröffentlichungstag der Anmeldung: 06.04.2005
(73) Patentinhaber: Johnson Controls GmbH, 51399 Burscheid (DE)
(72) Erfinder: MUZALEWSKI, Christoph, 42279 Wuppertal (DE)
(74) Vertreter: Wolff, Felix
(86) Internationale Anmeldenummer: PCT/EP2003/006989
(87) Internationale Veröffentlichungsnummer: WO 2004/005076

(56) Entgegenhaltungen:
- EP-A- 0 898 254
- DE-A- 3 512 785
- DE-U- 9 412 475
- US-A- 5 894 519
- US-A1- 2001 037 468

## Beschreibung

Die vorliegende Erfindung betrifft zunächst ein Verfahren zum Diebstahlschutz eines elektronischen, insbesondere in einem Fahrzeug zu montierenden, ein Datenträger-Laufwerk mit Daten-Leseeinrichtung aufweisenden Gerätes, wobei das Gerät ausschließlich vor einer Wiederinbetriebnahme nach einer Unterbrechung einer Spannungsversorgung zunächst in einem bezüglich der eigentlichen Gerätefunktion deaktivierten Sicherungsmodus betrieben wird, in dem zum Überführen in einen aktivierten Betriebsmodus eine Code-Prüfung durchführbar ist, wobei ein Aktivierungscode eingegeben und mit einem gerätespezifischen Sicherungscode verglichen wird, und wobei nur im Falle einer Übereinstimmung des eingegebenen Aktivierungscodes mit dem Sicherungscode das Gerät in den Betriebsmodus überführt wird.

Weiterhin betrifft die Erfindung auch ein entsprechendes System zum Diebstahlschutz eines solchen Gerätes, wobei das Gerät eine Eingabeeinrichtung für einen Aktivierungscode, eine Auswerteeinheit zum Vergleichen des eingegebenen Aktivierungscodes mit einem gerätespezifischen Sicherungscode sowie eine Aktiviereinrichtung zum Überführen des Gerätes aus einem bezüglich der eigentlichen Gerätefunktionen deaktivierten Sicherungsmodus in einen aktivierten Betriebsmodus nur im Falle einer festgestellten Übereinstimmung des Codes aufweist.

Es sei bemerkt, dass unter dem Begriff "Gerät" auch eine "Anlage" mit mehreren, über Leitungen verbundenen Gerätekomponenten verstanden werden kann.

Vor allem in Kraftfahrzeugen werden heute zum Teil sehr hochwertige, kostspielige Geräte installiert, wie beispielsweise CD-Player (-Wechsler), DVD-Systeme und/oder Navigationssysteme (GPS-Systeme; GPS=Global Positioning System). Wegen des hohen Wertes sind solche Geräte heute üblicherweise mit einem Diebstahlschutz ausgestattet.
So beschreibt die DE 40 14 725 A1 ein solches Diebstahlschutzsystem, wobei eine Eingabeeinrichtung eine Tastatur zum manuellen Eingeben eines Paßwortes (als "Aktivierungscode") aufweist. Bei der ersten Inbetriebnahme des Gerätes sowie auch nach jeder Unterbrechung der Betriebsspannung, das heißt auch nach einem eventuell nicht autorisierten Ausbau des Gerätes (Diebstahl), kann das Gerät nur durch Eingabe des Paßwortes wieder in Betrieb genommen werden, so dass das Gerät ohne Kenntnis des richtigen Paßwortes praktisch wertlos ist. Hierbei ist aber von Nachteil, dass die Länge des Paßwortes und daher auch die dadurch erreichte Sicherheit sehr begrenzt ist. Außerdem ist das manuelle Eingeben auch umständlich, und es besteht ein hohes Eingabefehlerrisiko, zumal es auch immer wieder vorkommt, dass das Paßwort bzw. der zum Aktivieren des Gerätes einzugebende Code vergessen oder eine entsprechende schriftliche Notiz des Codes verlegt wird.

In der DE 197 08 314 A1 sind eine Vorrichtung und ein Verfahren zur Diebstahlsicherung von Zusatzgeräten beschrieben, wobei zusätzlich zu einer Eingabeeinrichtung zum manuellen Eingeben eines sogenannten Identitätscodes in einem nicht zugänglichen Bereich des Kraftfahrzeuges ein Speicher vorgesehen ist, in dem ein weiterer, praktisch fahrzeugspezifischer Identitätscode abspeicherbar ist. Dadurch erfolgt im Normalfall eine völlig automatische Aktivierung, indem von dem Gerät der Identitätscode aus dem zusätzlichen Speicher abgefragt und mit dem gerätespezifischen Vergleichscode verglichen wird. Bei Übereinstimmung beider Codes kann das Gerät in Betrieb genommen werden. Bei nicht festgestellter Übereinstimmung kann dann eine manuelle Codeeingabe vorgenommen werden. Dieses System ist wegen des zusätzlichen, fahrzeugseitigen Speichers aufwendig hinsichtlich der Kosten für die notwendige Hardware und deren Montage.

Die EP 0 898 254 A2 betrifft eine Einrichtung zum Diebstahlschutz eines Geräts, das zur Inbetriebnahme einen Code benötigt, der von einem beschreibbaren Datenträger gelesen wird. Bei entnommenem Datenträger ist ein Betrieb des Geräts nicht möglich.

In der DE 94 12 475 U1 ist ein System zur Steuerung der Kontrolle der Nutzung von EDV-Anlagen beschrieben, bei der eine Schalteinrichtung die Nutzung der Anlage freigibt, wenn ein erster Code auf einer Chipkarte mit einem zweiten Code übereinstimmt. Der vorliegenden Erfindung liegt die Aufgabe zugrunde, mit einfachen und kostengünstigen Mitteln gleichzeitig eine hohe Sicherheit und einen guten Anwendungskomfort zu gewährleisten.

Erfindungsgemäß wird dies durch ein Verfahren nach dem Anspruch 1 bzw, durch ein System nach dem Anspruch 2 erreicht. Vorteilhafte Ausgestaltungsmerkmale sind in den abhängigen Ansprüchen und der nachfolgenden Beschreibung enthalten.

Es ist somit erfindungswesentlich, dass der Aktivierungscode ursprünglich auf einem solchen Datenträger gespeichert bzw. abgelegt wird, der zu dem jeweiligen Laufwerk des Gerätes paßt. Wenn es sich beispielsweise um ein CD-Laufwerk eines CD- oder DVD-Players handelt, wird als Datenträger für den Aktivierungscode eine entsprechende CD-ROM bzw. DVD-ROM verwendet. Diese "Aktivierungs-CD" wird dem Anwender zusammen mit dem Gerät zur Verfügung gestellt, wodurch die Inbetriebnahme des Gerätes wesentlich erleichtert wird. Es braucht im deaktivierten Sicherungsmodus nur der Datenträger in das Laufwerk eingegeben zu werden; der Aktivierungscode wird dann durch entsprechendes Auslesen mittels der Leseeinrichtung des Laufwerks eingegeben, wozu das Gerät entsprechend ausgelegt bzw. programmiert ist, um im Sicherungsmodus den Aktivierungscode von dem Dateiträger auslesen und einer Auswerteeinheit zuführen zu können, die dann den so erfassten und übermittelten Aktivierungscode mit dem gerätespezifischen, unmittelbar oder mittelbar hinterlegten, insbesondere gespeicherten Sicherungscode vergleicht. Je nach Ergebnis des Vergleichs wird das Gerät aktiviert oder nicht. Es werden somit der angestrebte hohe Anwendungskomfort sowie auch die hohe Sicherheit erreicht, weil wegen der nur durch die Kapazität des Datenträgers begrenzten Datenmenge bzw. Datenlänge eine äußerst große Anzahl von Kombinationen des Aktivierungscodes möglich ist. Dennoch wird das Fehlerrisiko bei der Dateneingabe auf nahezu Null reduziert, weil es nur abhängig von der Qualität des technischen Zusammenwirkens von Datenträger und zugehörigem Laufwerk bzw. dessen Leseeinrichtung ist.

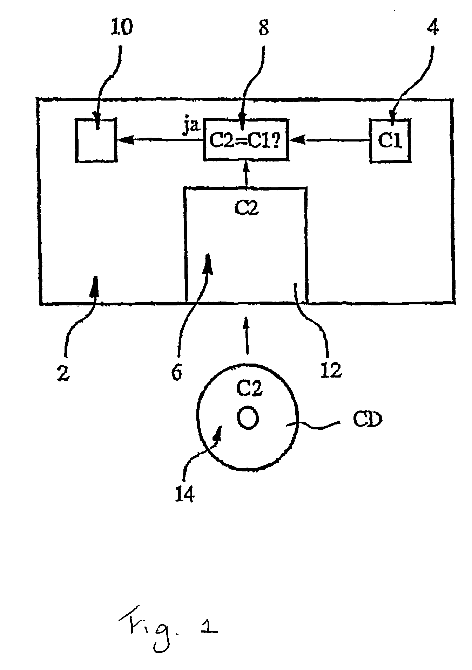

Im Folgenden soll die Erfindung anhand eines in der Zeichnung veranschaulichten, bevorzugten Ausführungsbeispiels genauer erläutert werden. Die einzige Zeichnungsfigur zeigt beispielhaft ein Gerät in einer schematischen, blockschaltbildartigen Darstellung.

Ein gegen Diebstahl zu schützendes Gerät 2 kann, wie dargestellt, als kompaktes Einzelgerät ausgeführt sein. Alternativ dazu liegt aber auch eine Ausbildung als Anlage aus mehreren Einzelkomponenten im Bereich der Erfindung, wobei die Einzelkomponenten über geeignete Datenverbindungen miteinander verbunden sind. Bevorzugt ist dem Gerät 2 zunächst ein Speicher 4 für einen gerätespezifischen Sicherungscode C1 zugeordnet, wobei der Speicher 4 innerhalb des Gerätes 2 oder an beliebiger anderer Stelle z. B. in einem Fahrzeug angeordnet sein kann. Ferner kann der Sicherungscode C1 auch auf andere Weise unmittelbar oder mittelbar hinterlegt sein. Beispielsweise ist es möglich, den Sicherungscode C1 aus anderen Informationen, z. B. aus einer Gerätenummer, über einen bestimmten Algorithmus zu errechnen. Weiterhin ist eine Eingabeeinrichtung 6 für einen Aktivierungscode C2 vorgesehen. In einer Auswerteeinheit 8 wird der eingegebene Aktivierungscode C2 mit dem Sicherungscode C1 verglichen. Die Auswerteeinheit 8 wirkt auf eine Aktiviereinrichtung 10 derart, dass das Gerät 2 aus einem bezüglich der eigentlichen Gerätefunktionen deaktivierten Sicherungsmodus nur im Falle einer festgestellten Übereinstimmung der Codes (C2=C1) in einen aktivierten bzw. durch normales Einschalten aktivierbaren Betriebsmodus überführt wird.

Das Gerät 2 weist weiterhin ein Datenträger-Laufwerk 12 mit einer entsprechenden, nicht gesondert dargestellten Leseeinrichtung für einen zugehörigen Datenträger 14 auf. Als Datenträger 14 ist beispielhaft eine Compact-Disk CD dargestellt, wobei es sich um eine CD-ROM oder eine DVD-ROM handeln kann.

Erfindungsgemäß wird als Eingabeeinrichtung 6 für den Aktivierungscode C2 das Datenträger-Laufwerk 12 des Gerätes 2 verwendet. Insofern ist die Eingabeeinrichtung 6 als Vorrichtung zum Erfassen und Übermitteln des Aktivierungscodes C2 ohne Erfordernis einer manuellen Eingabe ausgebildet. Dazu ist der Aktivierungscode C2 auf einem zugehörigen, separaten Datenträger 14 in Form von Datensignalen gespeichert, so dass der Aktivierungscode C2 in einfacher und komfortabler Weise dadurch in das Gerät 2 eingegeben werden kann, dass lediglich der Datenträger 14 zugeführt wird. Das Gerät 2 bzw. das Laufwerk 12 liest dann mit seiner Leseeinrichtung den Aktivierungscode C2 ein, der dann der Auswerteeinheit 8 zugeführt und entsprechend verarbeitet wird.

Jedem Gerät 2 wird folglich ein spezieller Aktivierungs-Datenträger 14 zugeordnet, der dem Anwender zusammen mit dem Gerät 2 zur Verfügung gestellt wird. Dieser gerätespezifische Datenträger 14 enthält einen spezifischen, in Form von entsprechenden Datensignalen abgespeicherten Aktivierungscode C2, der dem Sicherungscode C1 des zugehörigen Gerätes 2 entspricht.

Die den Aktivierungscode C2 lesende Leseeinrichtung des Laufwerks 12 kann ein "normaler" Lesekopf, der auch die eigentlichen Datenträger (z. B. Audio-CD's) liest, oder aber ein zusätzlicher Lesekopf sein.

Die Erfindung läßt sich insbesondere für Geräte mit CD-ROM- und/oder DVD-ROM-Laufwerk anwenden. Dies sind insbesondere CD-Player (auch Wechsler), DVD-Player, Satelliten-Navigationssysteme (GPS), Rechner (Laptops) und/oder dergleichen.

Die technischen Vorgänge innerhalb des Gerätes 2 zum Sperren bzw. Deaktivieren, zur Code-Prüfung und zum Überführen in den Betriebsmodus liegen im Bereich fachmännischen Könnens und werden daher an dieser Stelle nicht weiter beschrieben. Es kann sich um geräte-, system- bzw. kundenspezifische Realisierungen handeln.

## Patentansprüche

1. Verfahren zum Diebstahlschutz eines elektronischen, insbesondere in einem Fahrzeug einzusetzenden, ein Datenträger-Laufwerk (12) mit Leseeinrichtung aufweisenden Gerätes (2), wobei das Gerät (2) ausschließlich vor einer wie der inbetriebnahme nach einer Unterbrechung einer Spannungsversorgung zunächst in einem bezüglich der eigentlichen Gerätefunktion deaktivierten Sicherungsmodus betrieben wird, in dem zum Überführen in einen aktivierten bzw. aktivierbaren Betriebsmodus eine Code-Prüfung durchgeführt wird, wobei ein Aktivierungscode (C2) eingegeben und mit einem gerätespezifischen Sicherungscode (C1) verglichen wird und wobei nur im Falle einer Übereinstimmung des eingegeben Aktivierungscodes (C2) mit dem Sicherungscode (C1) das Gerät (2) in den Betriebsmodus überführt wird, wobei der zuvor in Form von entsprechenden Datensignalen auf einem für das Laufwerk (12) des Gerätes (2) geeigneten Datenträger (14) gespeicherte Aktivierungscode (C2) durch Einlesen der Datensignale des Datenträgers (14) über die Leseeinrichtung des Laufwerks (12) des Gerätes (2) eingegeben wird.

2. System zum Diebstahlschutz eines elektronischen, insbesondere in einem Fahrzeug einzusetzenden, ein Datenträger-Laufwerk (12) aufweisenden Gerätes (2), insbesondere unter Anwendung des Verfahrens nach Anspruch 1, wobei das Gerät (2) eine Eingabeeinrichtung (6) für einen Aktivierungscode (C2), eine Auswerteeinheit (8) zum Vergleichen des eingegebenen Aktivierungscodes (C2) mit einem gerätespezifischen Sicherungscode (C1) sowie eine Aktiviereinrichtung (10) zum Überführen des Gerätes (2) ausschließlich einer Unterbrechung einer Spannungsversorgung aus einem bezüglich der eigentlichen Gerätefunktionen deaktivierten Sicherungsmodus in einen aktivierten bzw. aktivierbaren Betriebsmodus nur im Falle einer festgestellten Übereinstimmung des Codes (C2, C1) aufweist, wobei als Eingabeeinrichtung (6) für den Aktivierungscode (C2) das Datenträger-Laufwerk (12) des Gerätes (2) verwendet wird, indem der zuvor auf einem zugehörigen, separaten Datenträger (14) gespeicherte Aktivierungscode (C2) über eine Leseeinrichtung des Laufwerks (12) einlesbar ist.

3. System nach Anspruch 2, **dadurch gekennzeichnet, dass** das Laufwerk (12) des Gerätes (2) ein CD-ROM-Laufwerk oder DVD-ROM-Laufwerk ist, wobei der Datenträger (14) eine entsprechende Compact-Disk (CD) in einer Ausführung als CD-ROM oder DVD-ROM ist.

4. System nach Anspruch 2 oder 3, **dadurch gekennzeichnet, dass** das Gerät (2) als CD-Player, DVD-Player, GPS-Navigationsgerät und/oder dergleichen ausgebildet und vorzugsweise mit einem zusätzlichen Rundfunk- und/oder Fernseh-Empfänger kombiniert ist.

5. Elektronisches Gerät (2) zur Anwendung bei dem Verfahren nach Anspruch 1 bzw. dem System nach einem der Ansprüche 2 bis 4, mit einem Datenträger-Laufwerk (12) mit Leseeinrichtung, einer Eingabeeinrichtung (6) für einen Aktivierungscode (C2), einer Auswerteeinheit (8) zum Vergleichen des Aktivierungscodes (C2) mit einem gerätespezifischen Sicherungscode (C1) sowie einer Aktivierungseinrichtung (10) zum Überführen des Gerätes (2) ausschließlich nach einer Unterbrechung einer Spannungsversorgung aus einem bezüglich der eigentlichen Gerätefunktionen deaktivierten Sicherungsmodus in einen aktivierten bzw. aktivierbaren Betriebsmodus nur im Falle einer festgestellten Übereinstimmung des Codes (C2, C1), wobei das Gerät derart ausgelegt ist, dass das Laufwerk (12) im Zusammenhang mit einem zugehörigen, gerätespezifischen Aktivierungs-Datenträger (14) die Eingabeeinrichtung (6) für den Aktivierungscode (C2) bildet, indem der Aktivierungscode (C2) im Sicherungsmodus durch Einlesen von entsprechenden Datensignalen von dem Datenträger (14) über die Leseeinrichtung des Laufwerks (12) eingebbar und der Auswerteeinheit (8) zuführbar ist.

6. Gerät nach Anspruch 5, **dadurch gekennzeichnet, dass** das Laufwerk (12) als CD-ROM- oder DVD-ROM-Laufwerk ausgebildet ist.

7. Gerät nach Anspruch 5 oder 6, **gekennzeichnet durch** eine Ausführung als Audio-, Video- und/oder GPS-Gerät.

8. Gerät nach einem der Ansprüche 5 bis 7, **gekennzeichnet durch** eine Ausführung als kompaktes Einzelgerät oder in modularer Bauweise aus mehreren, über Signalverbindungen zu verbindenden Komponenten.

## Claims

1. Method for theft prevention for an electronic appliance (2), particularly one which is to be used in a vehicle, which has a data storage medium drive (12) with a reading device, where, exclusively before a restart following an interruption in a power supply, the appliance (2) is first of all operated in a protection mode, in which the actual appliance function is deactivated and in which a code check is performed in order to transfer it to an activated or activatable operating mode, the code check involving an activation code (C2) being input and compared with an appliance-specific protection code (C1), and the appliance (2) being transferred to the operating mode only if there is a match between the input activation code (C2) and the protection code (C1), where the activation code (C2), previously stored in the form of appropriate data signals on a data storage medium (14) which is suitable for the drive (12) in the appliance (2), is input via the reading device of the drive (12) in the appliance (2) by reading in the data signals from the data storage medium (14).

2. System for theft prevention for an electronic appliance (2), particularly one which is to be used in a vehicle, which has a data storage medium drive (12), particularly using the method according to Claim 1, where the appliance (2) has an input device (6) for an activation code (C2), an evaluation unit (8) for comparing the input activation code (C2) with an appliance-specific protection code (C1) and also an activation device (10) for transferring the appliance (2), exclusively following an interruption in a power supply, from a protection mode, in which the actual appliance functions are deactivated, to an activated or activatable operating mode only if a match is found for the code (C2, C1), the input device (6) used for the activation code (C2) being the data storage medium drive (12) in the appliance (2) by virtue of the activation code (C2), previously stored on an associated, separate data storage medium (14), being able to read in via a reading device of the drive (12).

3. System according to Claim 2, **characterized in that** the drive (12) in the appliance (2) is a CD-ROM drive or DVD-ROM drive, the data storage medium (14) being an appropriate compact disc (CD) in CD-ROM or DVD-ROM form.

4. System according to Claim 2 or 3, **characterized in that** the appliance (2) is in the form of a CD player, DVD player, GPS navigation appliance and/or the like and is preferably combined with an additional radio and/or television receiver.

5. Electronic appliance (2) for use with the method according to Claim 1 or the system according to one of Claims 2 to 4, having a data storage medium drive (12) with a reading device, an input device (6) for an activation code (C2), an evaluation unit (8) for comparing the activation code (C2) with an appliance-specific protection code (C1) and also an activation device (10) for transferring the appliance (2), exclusively following an interruption in a power supply, from a protection mode, in which the appliance functions are deactivated, to an activated or activatable operating mode only if a match is found for the code (C2, C1), the appliance being designed such that the drive (12) in connection with an associated, appliance-specific activation data storage medium (14) forms the input device (6) for the activation code (C2) by virtue of the activation code (C2) being able to be input, in the protection mode, by reading in appropriate data signals from the data storage medium (14) using the reading device of the drive (12) and being able to be supplied to the evaluation unit (8).

6. Appliance according to Claim 5, **characterized in that** the drive (12) is in the form of a CD-ROM or DVD-ROM drive.

7. Appliance according to Claim 5 or 6, **characterized by** its being in the form of an audio, video and/or GPS appliance.

8. Appliance according to one of Claims 5 to 7, **characterized by** its being in the form of a compact single appliance or a modular design comprising a plurality of components which can be connected by means of signal connections.

## Revendications

1. Procédé de protection antivol d'un appareil électronique (2) présentant un lecteur de support de données (12) avec dispositif de lecture, notamment à utiliser dans un véhicule, l'appareil (2) fonctionnant dans un mode de sécurité où la fonction de l'appareil proprement dite est désactivée exclusivement avant une remise en service suite à une interruption d'une alimentation électrique et dans lequel un contrôle de code est effectué pour le passage dans un mode de fonctionnement activé ou activable, un code d'activation (C2) étant saisi et comparé avec un code de sécurité (C1) spécifique à l'appareil et l'appareil (2) n'étant amené dans le mode de fonctionnement qu'en cas de concordance entre le code d'activation (C2) saisi et le code de sécurité (C1), le code d'activation (C2) enregistré préalablement sous la forme de signaux de données correspondants sur un support de données (14) approprié pour le lecteur (12) de l'appareil (2) étant entré en lisant les signaux de données du support de données (14) par le biais du dispositif de lecture du lecteur (12) de l'appareil (2).

2. Système de protection antivol d'un appareil électronique (2) présentant un lecteur de support de données (12), notamment à utiliser dans un véhicule, notamment en utilisant le procédé selon la revendication 1, l'appareil (2) présentant un dispositif d'entrée (6) pour un code d'activation (C2), une unité d'interprétation (8) pour comparer le code d'activation (C2) entré avec un code de sécurité (C1) spécifique à l'appareil ainsi qu'un dispositif d'activation (10) pour amener l'appareil (2) exclusivement après une interruption d'une alimentation électrique d'un mode de sécurité où la fonction de l'appareil proprement dite est désactivée en un mode de fonctionnement activé ou activable uniquement en cas de concordance constatée entre les codes (C1, C2), le lecteur de support de données (12) de l'appareil (2) étant utilisé comme dispositif d'entrée (6) pour le code d'activation (C2) en ce que le code d'activation (C2) enregistré préalablement sur un support de données (14) séparé correspondant peut être lu par le biais d'un dispositif de lecture du lecteur (12).

3. Système selon la revendication 2, **caractérisé en ce que** le lecteur (12) de l'appareil (2) est un lecteur de CD-ROM ou un lecteur de DVD-ROM, le support de données (14) étant un disque compact (CD) correspondant réalisé sous la forme d'un CD-ROM ou d'un DVD-ROM.

4. Système selon la revendication 2 ou 3, **caractérisé en ce que** l'appareil (2) est réalisé sous la forme d'un lecteur de CD, d'un lecteur de DVD, d'un appareil de navigation GPS et/ou similaire et il est de préférence combiné avec un récepteur de radiodiffusion et/ou de télévision supplémentaire.

5. Appareil électronique (2) destiné à être utilisé avec le procédé selon la revendication 1 ou le système selon l'une des revendications 2 à 4, comprenant un lecteur de support de données (12) avec dispositif de lecture, un dispositif d'entrée (6) pour un code d'activation (C2), une unité d'interprétation (8) pour comparer le code d'activation (C2) avec un code de sécurité (C1) spécifique à l'appareil ainsi qu'un dispositif d'activation (10) pour amener l'appareil (2) exclusivement après une interruption d'une alimentation électrique d'un mode de sécurité où la fonction de l'appareil proprement dite est désactivée en un mode de fonctionnement activé ou activable uniquement en cas de concordance constatée entre les codes (C1, C2), l'appareil étant conçu de telle sorte que le lecteur (12), combiné avec un support de données d'activation (14) spécifique à l'appareil, forme le dispositif d'entrée (6) pour le code d'activation (C2), le code d'activation (C2) pouvant être entré en mode de sécurité en chargeant des signaux de données correspondants depuis le support de données (14) par le biais du dispositif de lecture du lecteur (12) et pouvant être acheminé à l'unité d'interprétation (8).

6. Appareil selon la revendication 5, **caractérisé en ce que** le lecteur (12) est réalisé sous la forme d'un lecteur de CD-ROM ou un lecteur de DVD-ROM.

7. Appareil selon la revendication 5 ou 6, **caractérisé par** une exécution sous la forme d'un appareil audio, vidéo et/ou GPS.

8. Appareil selon l'une des revendications 5 à 7, **caractérisé par** une exécution sous la forme d'un appareil individuel compact ou en construction modulaire à partir de plusieurs composants à relier par le biais de liaisons de signal.
